# EUROPÄISCHE PATENTSCHRIFT

(11) **EP 3 022 036 B1**
(45) Veröffentlichungstag und Bekanntmachung des Hinweises auf die Patenterteilung: **30.06.2021**
(21) Anmeldenummer: 14749731.7
(22) Anmeldetag: 14.07.2014
(51) Int. Cl.: B29C 45/14

(54) **VERFAHREN ZUR HERSTELLUNG EINES FORMTEILS**
PROCESS FOR MANUFACTURING A MOLDED ARTICLE
PROCÉDÉ DE FABRICATION D'UNE PIÈCE MOULÉE

(30) Priorität: 15.07.2013 DE 102013107459
(43) Veröffentlichungstag der Anmeldung: 25.05.2016
(73) Patentinhaber: Novem Car Interior Design GmbH, 95519 Vorbach (DE)
(72) Erfinder: EGERER, Gerhard, 92724 Trabitz (DE); KREUTZER, Martin, 95473 Creußen (DE); HOTH, Daniel, 95844 Eckersdorf (DE)
(74) Vertreter: Schlögl, Markus
(86) Internationale Anmeldenummer: PCT/EP2014/065047
(87) Internationale Veröffentlichungsnummer: WO 2015/007687

(56) Entgegenhaltungen:
- EP-A1- 2 295 293
- EP-A2- 2 556 940
- EP-A2- 2 556 940
- DE-A1-102005 029 610
- DE-A1-102010 030 911
- DE-A1-102011 012 789
- JP-A- H10 138 281
- US-A- 5 672 397
- US-A1- 2009 226 676
- US-A1- 2010 104 828

## Beschreibung

Die Erfindung betrifft ein Verfahren zum Herstellen eines Formteils. Bei dem Formteil handelt es sich insbesondere um ein als Formteil ausgebildetes Dekorteil und/oder Verkleidungsteil für einen Fahrzeuginnenraum.

Im Fahrzeuginnenraum werden zahlreiche als Formteil ausgebildete Dekor- und Verkleidungsteile eingebaut, beispielsweise Türverkleidungen, Konsolen- und Instrumentenverblendungen. Zu den Dekor- und Verkleidungsteilen zählen auch Bedientasten bzw. die Abdeckungen von Bedientasten.

Diese Formteile umfassen eine Dekorschicht an einer als Sichtseite ausgebildeten Formteil-Vorderseite und einen Träger an einer Formteil-Rückseite, die vorzugsweise der Formteil-Vorderseite gegenüberliegend angeordnet ist.

Das erfindungsgemäße Verfahren ist zur Herstellung von Formteilen vorgesehen, bei denen die als Sichtseite ausgebildete Formteil-Vorderseite in mindestens zwei Bereiche unterteilt ist, einen ersten Bereich und einen an den ersten Bereich angrenzenden zweiten Bereich. Die Dekorschicht umfasst ein erstes Dekormaterial und ein zweites Dekormaterial, wobei im ersten Bereich der Sichtseite das erste Dekormaterial und im zweiten Bereich der Sichtseite das zweite Dekormaterial die Sichtseite ausbildet.

Derartige Formteile werden üblicherweise hergestellt, indem die beiden Dekormaterialien nebeneinander in eine geöffnete Kavität eines Spritzgießwerkzeugs eingelegt werden und anschließen der Träger durch Einspritzen von Kunststoff in die Kavität ausgebildet wird, wobei die eingelegten Dekormaterialien hinterspritzt werden. Das auf diese Weise gebildete Formteil weist an seiner als Sichtseite ausgebildeten Formteil-Vorderseite nebeneinander die beiden Dekormaterialien auf, wobei an der Formteil-Vorderseite das erste und das zweite Dekormaterial zueinander beabstandet sind.

Dieser Abstand und die damit verbundene Fuge zwischen den beiden Dekormaterialien sind nicht nur aus optischen oder haptischen Gründen unerwünscht, sondern bringen auch technische Nachteile mit sich. So ist die Formteil-Vorderseite in diesem Bereich aneinandergrenzender Dekormaterialien uneben und muss daher gegebenenfalls eingeebnet werden, beispielsweise durch das Aufbringen einer Lackschicht. Auch kann der Abstand bzw. die Fuge als Schmutzfänger wirken, so dass der Bereich aneinandergrenzender Dekormaterialien im Laufe der Zeit unansehnlich wird und das Formteil daher ausgewechselt werden muss.

Zum Stand der Technik wird verwiesen auf JP H10138 281 A sowie auf DE 10 2011 012 789 A1, EP 2 556 940 A2, US 2009/226 676 A1, DE 10 2010 030 911 A1, US 2010/104 828 A1, EP 2 295 293 A1, US 5 672 397 A und DE 10 2005 029 610 A1.

Der vorliegenden Erfindung liegt die Aufgabe zugrunde, ein neues Verfahren zum Herstellen von Formteilen anzugeben, insbesondere ein Verfahren, das die vorgenannten Nachteile zumindest teilweise überwindet.

Diese Aufgabe wird durch die Merkmale des Anspruchs 1 gelöst. Vorteilhafte Ausgestaltungen und Weiterbildungen sind in den abhängigen Ansprüchen angegeben.

Das erfindungsgemäße Verfahren ist ein Verfahren zum Herstellen eines Formteils, insbesondere eines als Formteil ausgebildeten Dekorteils und/oder Verkleidungsteils für einen Fahrzeuginnenraum. Bei dem Formteil kann es sich insbesondere um das nachfolgend beschriebene Formteil handeln.

Dieses herzustellende Formteil umfasst eine Dekorschicht an einer als Sichtseite ausgebildeten Formteil-Vorderseite und einen Träger an einer Formteil-Rückseite. Die als Sichtseite ausgebildete Formteil-Vorderseite ist in mindestens zwei Bereiche unterteilt, einen ersten Bereich und einen an den ersten Bereich angrenzenden zweiten Bereich. Die Dekorschicht umfasst ein erstes Dekormaterial und ein zweites Dekormaterial. Das erste Dekormaterial und das zweite Dekormaterial weisen mit einer Abweichung von maximal 20% der größeren Dicke die gleiche Dicke auf. Im ersten Bereich der Formteil-Vorderseite bildet das erste Dekormaterial und im zweiten Bereich der Formteil-Vorderseite das zweite Dekormaterial die Sichtseite aus.

Das erfindungsgemäße Verfahren umfasst folgende Schritte:
a) Vorformen des ersten Dekormaterials in eine erste Dekorschale und des zweiten Dekormaterials in eine zweite Dekorschale, wobei das erste Dekormaterial und das zweite Dekormaterial mit einer Abweichung von maximal 20% der größeren Dicke die gleiche Dicke aufweisen, wobei die erste Dekorschale und die zweite Dekorschale je eine Vorderseite zur Ausbildung der Sichtseite des Formteils und eine Rückseite aufweisen;
b) Einlegen der ersten Dekorschale in eine geöffnete Kavität eines Spritzgießwerkzeugs derart, dass die Vorderseite der ersten Dekorschale zumindest teilweise an einer Wandung der Kavität anliegt;
c) Einlegen der zweiten Dekorschale in die geöffnete Kavität des Spritzgießwerkzeugs derart,
   c1) dass ein erster Teil der Vorderseite der zweiten Dekorschale zumindest teilweise an der Wandung der Kavität anliegt,
   c2) dass ein zweiter Teil der Vorderseite der zweiten Dekorschale in einem Überlappbereich zumindest teilweise an der Rückseite der ersten Dekorschale anliegt, und
   c3) dass ein dritter Teil der Vorderseite der zweiten Dekorschale in einem Übergangsbereich eine seitliche Grenzfläche der ersten Dekorschale, die die Vorderseite und die Rückseite der ersten Dekorschale miteinander verbindet, überspannt;
d) Schließen der Kavität;
e) Ausbildung des Trägers durch Einspritzen von Kunststoff in die Kavität,
   e1) wobei der eingespritzte Kunststoff die Vorderseite der ersten Dekorschale und den ersten Teil der Vorderseite der zweiten Dekorschale gegen die Wandung drückt,
   e2) wobei der eingespritzte Kunststoff im Überlappbereich den zweiten Teil der Vorderseite der zweiten Dekorschale gegen die Rückseite der ersten Dekorschale drückt, und
   e3) wobei der eingespritzte Kunststoff im Übergangsbereich den dritten Teil der Vorderseite der zweiten Dekorschale gegen die seitliche Grenzfläche der ersten Dekorschale drückt.

Der Verfahrensschritt "Vorformen" umfasst die zweidimensionale Formgebung und/oder die dreidimensionale Formgebung der üblicherweise zunächst eben ausgebildeten oder plattenförmigen oder aufgerollt auf Rollen bereitgestellten Ausgangsmaterialien.

Unter zweidimensionaler Formgebung wird hierbei das Zuschneiden der Außenkonturen des Materials verstanden. Dies kann beispielsweise erfolgen durch Schneiden oder Stanzen. Hier können jedoch noch Überstände, beispielsweise Haltelappen, verbleiben, über die das Material in der Kavität fixiert wird. Diese Überstände werden dann in der Regel erst nach dem Spritzgießen und Aushärten entfernt, beispielsweise abgeschnitten oder abgefräst.

Unter dreidimensionaler Formgebung wird hierbei die zumindest grobe Anpassung an die vorgesehene Endform des jeweiligen Materials im fertigen Formteil verstanden, die Feinanpassung der dreidimensionalen Form kann dann gegebenenfalls nach dem Einlegen in die Kavität beim Spritzgießen durch den vom eingespritzten Kunststoff ausgehenden Druck, der die Materialien gegen die Wandung der Kavität drückt und dabei formt, erfolgen. Die dreidimensionale Formgebung kann beispielsweise durch Umformen oder Tiefziehen oder Pressen erfolgen.

Die Vorteile der Erfindung liegen insbesondere darin, dass der Abstand zwischen den beiden Dekormaterialien an der Formteil-Vorderseite durch dieses Verfahren, insbesondere den vorgenannten Schritt, wonach der eingespritzte Kunststoff im Übergangsbereich den dritten Teil der Vorderseite der zweiten Dekorschale gegen die seitliche Grenzfläche der ersten Dekorschale drückt, im Vergleich zum eingangs beschriebenen Stand der Technik klein ausfällt, gegebenenfalls sogar ganz oder nahezu ganz verschwindet bzw. zumindest optisch für ein menschliches Auge ohne Hilfsmittel nicht mehr erkennbar und/oder haptisch für eine menschliche Hand ohne Hilfsmittel nicht mehr erfühlbar ist. Mittels des erfindungsgemäßen Verfahrens lässt sich somit ein optisch und/oder haptisch ansprechendes Formteil herstellen, bei dem insbesondere der Übergang zwischen den beiden Dekormaterialien an der Formteil-Vorderseite keine oder zumindest nahezu keine Fuge erkennen lässt. Ferner ist der Übergangsbereich zwischen aneinander grenzenden Dekormaterialien an der Formteil-Vorderseite völlig oder zumindest weitestgehend eben ausgebildet und muss daher nicht zwingend durch eine Lackschicht oder Vergleichbares eingeebnet werden. Auch ist die Lebensdauer eines mit dem erfindungsgemäßen Verfahren hergestellten Formteils verlängert, da aufgrund der fehlenden oder zumindest nahezu fehlenden Fuge ein Schmutzfänger, durch den das Formteil im Laufe der Zeit unansehnlich werden kann, entfällt oder zumindest die Schutzfänger-Eigenschaft reduziert ist.

Beim oder nach dem Einlegen der ersten Dekorschale und/oder der zweiten Dekorschale in die geöffnete Kavität des Spritzgießwerkzeugs kann vorgesehen sein, dass die erste Dekorschale und/oder die zweite Dekorschale in ihrer Position fixiert werden, beispielsweise über Fixierstifte im Werkzeug, die mit Löchern in Haltelaschen an den Dekorschalten zusammenwirken. Dadurch wird ein Verrutschen der Dekorschalen beim Zusammenfahren des Werkzeugs oder beim Einspritzen des Kunststoffs verhindert.

Eine Weiterbildung des Verfahrens sieht vor, dass das erste Dekormaterial und/oder das zweite Dekormaterial vor dem Vorformen oder die erste Dekorschale und/oder die zweite Dekorschale vor dem Einlegen in die Kavität an ihrer nicht zur Ausbildung der Sichtseite des Formteils vorgesehenen Rückseite und/oder das erste Dekormaterial oder die erste Dekorschale an ihrer seitlichen Grenzfläche mit einer Klebelage versehen werden. Beispielsweise kann eine Klebefolie aufkaschiert oder ein Primer auflackiert werden. Dadurch wird im herzustellenden Formteil die Haftung sowohl zwischen Dekormaterial und Träger als auch zwischen den beiden Dekormaterialien im Überlappbereich und/oder im Übergangsbereich verbessert.

Auch kann vorgesehen sein, dass das erste Dekormaterial und/oder das zweite Dekormaterial vor dem Vorformen oder die erste Dekorschale und/oder die zweite Dekorschale vor dem Einlegen in die Kavität an ihrer zur Ausbildung der Sichtseite des Formteils vorgesehenen Vorderseite gestaltet und/oder bearbeitet und/oder lackiert werden, beispielsweise durch Prägen, Schleifen, Ätzen und/oder Bedrucken.

Nach dem Einspritzen, Aushärten und Entnehmen des Formteils aus dem Spritzgießwerkzeug kann als weiterer Verfahrensschritt auch das Aufbringen einer transparenten und/oder transluzente Lackschicht an der Formteil-Vorderseite vorgesehen sein.

An die vorstehend beschriebenen Verfahren können sich zur Fertigstellung der Formteile gegebenenfalls weitere Verfahrensschritte anschließen, beispielsweise eine mechanische und/oder chemische Bearbeitung der sichtseitigen Oberfläche, ein Zuschneiden des Formteils, ein Lackieren der Randbereiche des Formteils, um ein Eindringen von Feuchtigkeit zwischen die Lagen zu verhindern, ein Beschriften und ein Anbringen zusätzlicher Dekorelemente und/oder Halterungsteile.

Ein mit dem erfindungsgemäßen Verfahren hergestelltes Formteil umfasst eine Dekorschicht an einer als Sichtseite ausgebildeten Formteil-Vorderseite und einen Träger an einer Formteil-Rückseite. Die als Sichtseite ausgebildete Formteil-Vorderseite ist in mindestens zwei Bereiche unterteilt, einen ersten Bereich und einen an den ersten Bereich angrenzenden zweiten Bereich. Die Dekorschicht umfasst ein erstes Dekormaterial und ein zweites Dekormaterial, wobei das erste Dekormaterial und das zweite Dekormaterial je eine Vorderseite und eine Rückseite aufweisen.

Im ersten Bereich der Formteil-Vorderseite bildet die Vorderseite des ersten Dekormaterials und im zweiten Bereich der Formteil-Vorderseite ein erster Teil der Vorderseite des zweiten Dekormaterials die Sichtseite aus. Ein zweiter Teil der Vorderseite des zweiten Dekormaterials liegt teilweise in einem Überlappbereich an der Rückseite des ersten Dekormaterials an. Ein dritter Teil der Vorderseite des zweiten Dekormaterials liegt in einem Übergangsbereich an einer seitlichen Grenzfläche des ersten Dekormaterials, die die Vorderseite und die Rückseite des ersten Dekormaterials miteinander verbindet, an.

Bei dem Formteil weisen das erste Dekormaterial und das zweite Dekormaterial mit einer Abweichung von maximal 20% der größeren Dicke die gleiche Dicke auf.

Die Vorteile des Formteils ergeben sich aus den vorstehend anhand des Verfahrens beschriebenen Vorteilen.

Bei dem Formteil kann es sich um ein als Formteil ausgebildetes Dekorteil und/oder Verkleidungsteil für einen Fahrzeuginnenraum handeln.

Das vorangehend beschriebene Formteil kann beispielsweise mit dem vorstehend beschriebenen erfindungsgemäßen Verfahren hergestellt sein.

Eine Weiterbildung des Formteils sieht vor, dass der Abstand zwischen der seitlichen Grenzfläche des ersten Dekormaterials und dem dritten Teil der Vorderseite des zweiten Dekormaterials an der als Sichtseite ausgebildeten Formteil-Vorderseite höchsten 0,5 mm beträgt, insbesondere höchstens 0,1 mm, vorzugsweise höchstens 0,05 mm, weiter vorzugsweise höchstens 0,01 mm.

Auch kann vorgesehen sein, dass eine durch den Abstand zwischen der seitlichen Grenzfläche des ersten Dekormaterials und dem dritten Teil der Vorderseite des zweiten Dekormaterials an der als Sichtseite ausgebildeten Formteil-Vorderseite ausgebildete Fuge zwischen dem ersten Dekormaterial und dem zweiten Dekormaterial an der Formteil-Vorderseite optisch für ein menschliches Auge ohne Hilfsmittel nicht mehr erkennbar und/oder haptisch für eine menschliche Hand ohne Hilfsmittel nicht mehr erfühlbar ist. Mit anderen Worten: Beim Formteil ist am Übergang zwischen den beiden Dekormaterialien an der Formteil-Vorderseite keine oder zumindest nahezu keine Fuge erkennbar oder feststellbar. Vielmehr kann der Übergang zwischen aneinander grenzenden Dekormaterialien an der Formteil-Vorderseite völlig oder zumindest weitestgehend eben ausgebildet sein, so dass die Formteil-Vorderseite nicht zwingend durch eine Lackschicht oder Vergleichbares eingeebnet werden muss.

Gemäß einer Weiterbildung kann das erste Dekormaterial an seiner Rückseite eine Klebelage aufweisen, über die das erste Dekormaterial im Überlappbereich mit dem zweiten Teil der Vorderseite des zweiten Dekormaterials und ansonsten mit dem Träger verbunden ist.

Auch kann vorgesehen sein, dass das erste Dekormaterial an seiner seitlichen Grenzfläche eine Klebelage aufweist, über die das erste Dekormaterial mit dem dritten Teil der Vorderseite des zweiten Dekormaterials verbunden ist.

Gemäß einer Weiterbildung weist das zweite Dekormaterial an seiner Rückseite eine Klebelage auf, über die das zweite Dekormaterial mit dem Träger verbunden ist. Beispielsweise kann eine Klebefolie aufkaschiert oder ein Primer auflackiert sein.
Auch ist es möglich, dass die Vorderseite der Dekormaterialien bzw. die Formteil-Vorderseite gestaltet und/oder bearbeitet und/oder lackiert ist, beispielsweise durch Prägen, Schleifen, Ätzen und/oder Bedrucken.

Sowohl bei dem erfindungsgemäßen Verfahren als auch bei dem Formteil kann vorgesehen sein, dass das erste Dekormaterial eine größere Sprödigkeit und/oder eine kleinere Duktilität als das zweite Dekormaterial aufweist.

Sowohl bei dem erfindungsgemäßen Verfahren als auch bei dem Formteil kann vorgesehen sein, dass das erste Dekormaterial eine größere Dicke als das zweite Dekormaterial aufweist. Beispielsweise kann das erste Dekormaterial eine Dicke von mindestens 0,5 mm und das zweite Dekormaterial eine Dicke von höchstens 0,4 mm aufweisen.

Alternativ kann aber auch vorgesehen sein, dass das erste Dekormaterial eine kleinere Dicke als das zweite Dekormaterial aufweist. Beispielsweise kann das erste Dekormaterial eine Dicke von höchstens 0,4 mm und das zweite Dekormaterial eine Dicke von mindestens 0,5 mm aufweisen. Weiter könnte auch vorgesehen sein, dass das erste Dekormaterial und das zweite Dekormaterial mit einer Abweichung von maximal 10%, der größeren Dicke die gleiche Dicke aufweisen.

Es kann vorgesehen sein, dass das erste Dekormaterial eine Metalllage, insbesondere eine Aluminiumlage oder Edelstahllage oder Magnesiumlage oder Chromlage, oder eine Holzlage oder eine Kunststofflage oder eine Textillage ist oder umfasst und/oder das zweite Dekormaterial eine Metalllage, insbesondere eine Edelstahllage oder eine Aluminiumlage oder eine Magnesiumlage oder eine Chromlage, oder eine Holzlage oder eine Kunststofflage oder eine Textillage ist oder umfasst.
Es kann auch vorgesehen sein, dass die Dekorschicht und/oder die Dekormaterialien aus einem Verbundwerkstoff, insbesondere einem Schichtverbundwerkstoff, gebildet sind, der eine Dekorlage umfasst. Die Dekorlage kann hierbei beispielsweise ein Holzfurnier, eine Metalllage, eine Folie, vorzugsweise eine Kunststoff- und/oder Metallfolie, und/oder eine Textillage bzw. ein Stoff sein. Es ist aber auch möglich, dass die Dekorschicht und/oder die Dekormaterialien eine Metalllage, eine Folie, vorzugsweise eine Kunststoff- und/oder Metallfolie, und/oder eine Textillage bzw. ein Stoff ist bzw. sind. Beim Vorsehen eines Holzfurniers ist das Holzfurnier üblicherweise an seiner Rückseite mit einer Vlieslage zur Flexibilisierung des Holzfurniers versehen. Bei dem Holzfurnier kann es sich hierbei sowohl um ein Echtholzfurnier als auch um ein Kunstholzfurnier handeln.

Ferner kann die Formteil-Vorderseite mit einer transparenten und/oder transluzenten Lackschicht überzogen sein.

Der Träger kann ein oder mehrere Befestigungselemente für die Anbringung des Formteils, insbesondere in einem Fahrzeuginnenraum, aufweisen oder ausbilden. Diese Befestigungselemente können einstückig mit dem Träger ausgebildet sein, es kann sich aber auch um zusätzliche Elemente handeln, die im Träger verankert sind, beispielsweise durch Umspritzen mit dem zur Bildung des Trägers eingespritzten Kunststoff bei der Formteilherstellung.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert. Dabei zeigen
- FIG 1: in einer dreidimensionalen Schnittdarstellung ein Ausführungsbeispiel eines mit dem erfindungsgemäßen Verfahren hergestellten Formteils,
- FIG 2: einen Ausschnitt eines Schnitts durch ein Spritzgießwerkzeug bei der erfindungsgemäßen Herstellung eines Ausführungsbeispiels eines Formteils, und
- FIG 3: einen Ausschnitt eines Schnitts durch ein Ausführungsbeispiel eines mit dem erfindungsgemäßen Verfahren hergestellten Formteils.

Einander entsprechende Teile und Komponenten sind in den Figuren mit den gleichen Bezugszeichen bezeichnet.

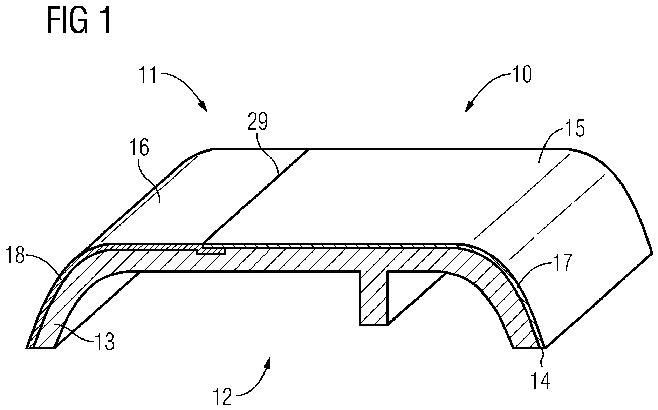

FIG 1 zeigt schematisch in einer dreidimensionalen Schnittdarstellung ein mit dem erfindungsgemäßen Verfahren hergestelltes Formteil 10. Das Formteil 10 umfasst eine Dekorschicht 14 an einer als Sichtseite ausgebildeten Formteil-Vorderseite 11 und einen Träger 13 an einer der Formteil-Vorderseite 11 gegenüberliegenden Formteil-Rückseite 12. Die als Sichtseite ausgebildete Formteil-Vorderseite 11 ist in einen ersten Bereich 15 und einen an den ersten Bereich 15 angrenzenden zweiten Bereich 16 unterteilt, wobei der erste Bereich 15 von einem ersten Dekormaterial 17 der Dekorschicht 14 und der zweite Bereich 16 von einem zweiten Dekormaterial 18 der Dekorschicht 14 gebildet ist.

Nur linienartig ist in FIG 1 eine Fuge 29 zwischen dem ersten Dekormaterial 17 und dem zweiten Dekormaterial 18 an der Formteil-Vorderseite 11 zu erkennen. Diese Fuge 29 ist derart schmal ausgebildet, dass zwar der Übergang zwischen den verschiedenen aneinandergrenzenden Dekormaterialien 17 und 18 zu erkennen ist, dass jedoch das menschliche Auge optisch ohne Hilfsmittel die Fuge 29 nicht erkennen kann und auch die menschliche Hand die Fuge 29 ohne Hilfsmittel nicht mehr erfühlen kann. Der Übergang zwischen den Dekormaterialien 17 und 18 an der Formteil-Vorderseite 11 erscheint für den Menschen somit eben zu sein, ohne Fuge 29.

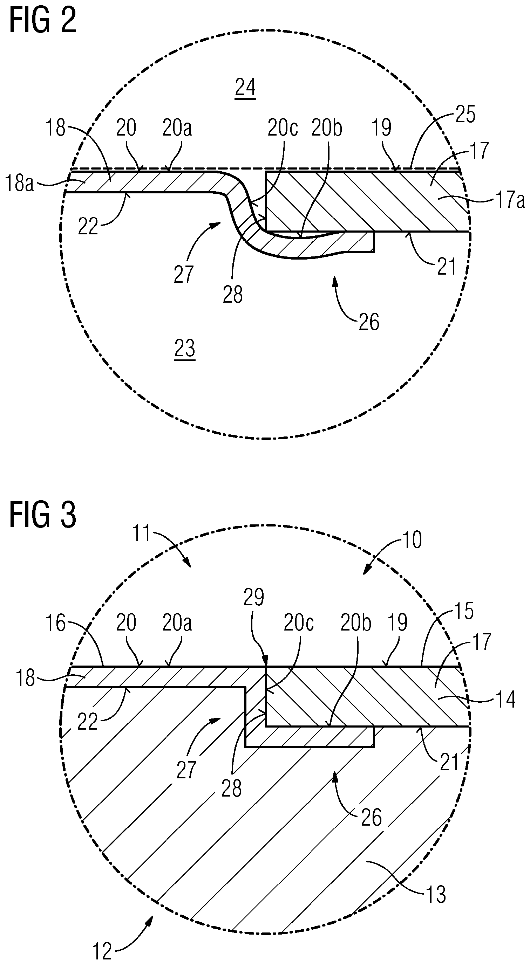

FIG 2 verdeutlicht die Herstellung des in FIG 1 gezeigten Formteils 10 oder auch eines alternativen Formteils. Gezeigt ist ein Ausschnitt eines Schnitts durch ein Spritzgießwerkzeug 24 bei der erfindungsgemäßen Herstellung des Formteils 10.

FIG 3 zeigt einen Ausschnitt eines Schnitts durch ein Formteil 10, beispielsweise des in FIG 1 gezeigten Formteils 10. In dieser Darstellung sind Details des Formteils 10 am Übergang zwischen dem ersten Bereich 15 mit dem ersten Dekormaterial 17 und dem zweiten Bereich 16 mit dem zweiten Dekormaterial 18 erkennbar. Das erste Dekormaterial 17 weist eine Vorderseite 19 und eine Rückseite 21 auf, das zweite Dekormaterial 18 weist eine Vorderseite 20 und eine Rückseite 22 auf.

Im ersten Bereich 15 der Formteil-Vorderseite 11 bildet die Vorderseite 19 des ersten Dekormaterials 17 die Sichtseite des Formteils 10 aus. Im zweiten Bereich 16 der Formteil-Vorderseite 11 bildet ein erster Teil 20a der Vorderseite 20 des zweiten Dekormaterials 18 die Sichtseite aus.

Ein zweiter Teil 20b der Vorderseite 20 des zweiten Dekormaterials 18 liegt teilweise in einem Überlappbereich 26 an der Rückseite 21 des ersten Dekormaterials 17 an. Ein dritter Teil 20c der Vorderseite 20 des zweiten Dekormaterials 18 liegt in einem Übergangsbereich 27 an einer seitlichen Grenzfläche 28 des ersten Dekormaterials 17, die die Vorderseite 19 und die Rückseite 21 des ersten Dekormaterials 17 miteinander verbindet, an.

Der Abstand zwischen der seitlichen Grenzfläche 28 des ersten Dekormaterials 17 und dem dritten Teil 20c der Vorderseite 20 des zweiten Dekormaterials 18 an der als Sichtseite ausgebildeten Formteil-Vorderseite 11 ist derart gering, dass er in FIG 3 nicht zu erkennen ist. Die durch diesen Abstand ausgebildete Fuge 29 zwischen den beiden Dekormaterialien 17 und 18 an der Formteil-Vorderseite 11 ist derart schmal, dass sie für das menschliche Auge ohne Hilfsmittel nicht sichtbar und für die menschliche Hand ohne Hilfsmittel nicht ertastbar ist.

FIG 2 verdeutlicht, wie sich ein Formteil mit einem derart eben wirkenden Übergang zwischen den beiden Dekormaterialien 17 und 18 herstellen lässt. Zu erkennen ist ein Teil einer Kavität 23 der Spritzgießform 24. An eine Wandung 25 der Kavität 23 wurde eine aus dem ersten Dekormaterial 17 bereits vorgeformte erste Dekorschale 17a angelegt, und zwar derart, dass eine Vorderseite 19 der ersten Dekorschale 17a, die zur Ausbildung der Sichtseite des Formteils 10 vorgesehen ist, an der Wandung anliegt. Die Rückseite der ersten Dekorschale 17a ist mit Bezugszeichen 21 bezeichnet.

Ferner wurde eine aus dem zweiten Dekormaterial 18 bereits vorgeformte zweite Dekorschale 18a in die Kavität 23 des Spritzgießwerkzeugs 24 derart eingelegt, dass ein erster Teil 20a einer Vorderseite 20 der zweiten Dekorschale 18a zumindest teilweise an der Wandung 25 der Kavität 23 anliegt, dass ein zweiter Teil 20b der Vorderseite 20 der zweiten Dekorschale 18a in einem Überlappbereich 26 zumindest teilweise an der Rückseite 21 der ersten Dekorschale 17a anliegt, und dass ein dritter Teil 20c der Vorderseite 20 der zweiten Dekorschale 18a teilweise in einem Übergangsbereich 27 eine seitliche Grenzfläche 28 der ersten Dekorschale 17a, die die Vorderseite 19 und die Rückseite 21 der ersten Dekorschale 17a miteinander verbindet, überspannt. Die Rückseite der zweiten Dekorschale 18a ist mit Bezugszeichen 22 bezeichnet.

FIG 2 zeigt, dass direkt an der Wandung 25 der Kavität 23 die beiden Dekorschalen 17a und 18a und damit die beiden Dekormaterialien 17 und 18 zueinander beabstandet sind und somit zwischen sich angrenzend an die Wandung 25 eine deutlich erkennbare Fuge aufweisen. Durch weitere Verfahrensschritte bei der Herstellung des Formteils muss somit dieser Abstand zwischen den Dekormaterialien 17 und 18 verkleinert werden.

Dies erfolgt dadurch, dass im Anschluss an diese vorstehend beschriebene und in FIG 2 dargestellte Situation der Träger 13 des Formteils 10 durch Einspritzen von Kunststoff in die geschlossene Kavität 23 ausgebildet wird. Hierbei drückt der eingespritzte Kunststoff die Vorderseite 19 der ersten Dekorschale 17a und den ersten Teil 20a der Vorderseite 20 der zweiten Dekorschale 18a gegen die Wandung 25. Ferner drückt der eingespritzte Kunststoff im Überlappbereich 26 den zweiten Teil 20b der Vorderseite 20 der zweiten Dekorschale 18a gegen die Rückseite 21 der ersten Dekorschale 17a. Außerdem drückt der eingespritzte Kunststoff im Übergangsbereich 27 den dritten Teil 20c der Vorderseite 20 der zweiten Dekorschale 18a gegen die seitliche Grenzfläche 28 der ersten Dekorschale 17a.

Auch wenn dies in den Figuren nicht explizit gezeigt ist, so kann gemäß einer Variante das erste Dekormaterial 17 und/oder das zweite Dekormaterial 18 vor dem Vorformen oder auch die erste Dekorschale 17a und/oder die zweite Dekorschale 18a vor dem Einlegen in die Kavität 23 an ihrer nicht zur Ausbildung der Sichtseite des Formteils 10 vorgesehenen Rückseite 21 bzw. 22 mit einer Klebelage versehen worden sein. Auch die seitliche Grenzfläche 28 des ersten Dekormaterials 17 oder der ersten Dekorschale 17a kann mit einer Klebelage versehen worden sein.

In diesem Fall weist dann auch das erste Dekormaterial 17 des in den Figuren gezeigten Formteils 10 an seiner Rückseite 21 eine Klebelage auf, über die das erste Dekormaterial 17 im Überlappbereich 26 mit dem zweiten Teil 20b der Vorderseite 20 des zweiten Dekormaterials 18 und ansonsten mit dem Träger 13 verbunden ist. Gegebenenfalls weist in einem solchen Fall auch das erste Dekormaterial 17 an seiner seitlichen Grenzfläche 28 eine Klebelage auf, über die das erste Dekormaterial 17 mit dem dritten Teil 20c der Vorderseite 20 des zweiten Dekormaterials 18 verbunden ist. Gegebenenfalls weist auch das zweite Dekormaterial 18 an seiner Rückseite 22 eine Klebelage auf, über die das zweite Dekormaterial 18 mit dem Träger 13 verbunden ist.
Ebenfalls könnte in einer weiteren Variante, die in den Figuren nicht erkennbar ist, vorgesehen sein, dass das erste Dekormaterial 17 und/oder das zweite Dekormaterial 18 vor dem Vorformen oder auch die erste Dekorschale 17a und/oder die zweite Dekorschale 18a vor dem Einlegen in die Kavität 23 an ihrer zur Ausbildung der Sichtseite des Formteils 10 vorgesehenen Vorderseite 19 bzw. 20 gestaltet und/oder bearbeitet und/oder lackiert worden sind.

### Bezugszeichenliste

- 10: Formteil
- 11: Formteil-Vorderseite
- 12: Formteil-Rückseite
- 13: Träger
- 14: Dekorschicht
- 15: erster Bereich der Formteil-Vorderseite 11
- 16: zweiter Bereich der Formteil-Vorderseite 11
- 17: erstes Dekormaterial
- 17a: erste Dekorschale
- 18: zweites Dekormaterial
- 18a: zweite Dekorschale
- 19: Vorderseite des ersten Dekormaterials 17 bzw. der ersten Dekorschale 17a
- 20: Vorderseite des zweiten Dekormaterials 18 bzw. der zweiten Dekorschale 18a
- 20abc: erster/zweiter/dritter Teil der Vorderseite 20
- 21: Rückseite des ersten Dekormaterials 17 bzw. der ersten Dekorschale 17a
- 22: Rückseite des zweiten Dekormaterials 18 bzw. der zweiten Dekorschale 18a
- 23: Kavität
- 24: Spritzgießwerkzeug
- 25: Wandung der Kavität 23
- 26: Überlappbereich
- 27: Übergangsbereich
- 28: seitliche Grenzfläche der ersten Dekorschale 17 bzw. des ersten Dekormaterials 17a
- 29: Fuge zwischen dem ersten Dekormaterial 17 und dem zweiten Dekormaterial 18

## Patentansprüche

1. Verfahren zum Herstellen eines Formteils (10), insbesondere eines als Formteil (10) ausgebildeten Dekorteils und/oder Verkleidungsteils für einen Fahrzeuginnenraum,
umfassend eine Dekorschicht (14) an einer als Sichtseite ausgebildeten Formteil-Vorderseite (11) und einen Träger (13) an einer Formteil-Rückseite (12),
wobei die als Sichtseite ausgebildete Formteil-Vorderseite (11) in mindestens zwei Bereiche unterteilt ist, einen ersten Bereich (15) und einen an den ersten Bereich (15) angrenzenden zweiten Bereich (16),
wobei die Dekorschicht (14) ein erstes Dekormaterial (17) und ein zweites Dekormaterial (18) umfasst,
wobei das erste Dekormaterial (17) und das zweite Dekormaterial (18) mit einer Abweichung von maximal 20% der größeren Dicke die gleiche Dicke aufweisen,
wobei im ersten Bereich (15) der Formteil-Vorderseite (11) das erste Dekormaterial (17) und im zweiten Bereich (16) der Formteil-Vorderseite (11) das zweite Dekormaterial (18) die Sichtseite ausbildet,
umfassend folgende Schritte:
a) Vorformen des ersten Dekormaterials (17) in eine erste Dekorschale (17a) und des zweiten Dekormaterials (18) in eine zweite Dekorschale (18a), wobei das erste Dekormaterial (17) und das zweite Dekormaterial (18) mit einer Abweichung von maximal 20% der größeren Dicke die gleiche Dicke aufweisen, wobei die erste Dekorschale (17a) und die zweite Dekorschale (18a) je eine Vorderseite (19; 20) zur Ausbildung der Sichtseite des Formteils (10) und eine Rückseite (21; 22) aufweisen;
b) Einlegen der ersten Dekorschale (17a) in eine geöffnete Kavität (23) eines Spritzgießwerkzeugs (24) derart, dass die Vorderseite (19) der ersten Dekorschale (17a) zumindest teilweise an einer Wandung (25) der Kavität (23) anliegt;
c) Einlegen der zweiten Dekorschale (18a) in die geöffnete Kavität (23) des Spritzgießwerkzeugs (24) derart,
c1) dass ein erster Teil (20a) der Vorderseite (20) der zweiten Dekorschale (18a) zumindest teilweise an der Wandung (25) der Kavität (23) anliegt,
c2) dass ein zweiter Teil (20b) der Vorderseite (20) der zweiten Dekorschale (18a) in einem Überlappbereich (26) zumindest teilweise an der Rückseite (21) der ersten Dekorschale (17a) anliegt, und
c3) dass ein dritter Teil (20c) der Vorderseite (20) der zweiten Dekorschale (18a) teilweise in einem Übergangsbereich (27) eine seitliche Grenzfläche (28) der ersten Dekorschale (17a), die die Vorderseite (19) und die Rückseite (21) der ersten Dekorschale (17a) miteinander verbindet, überspannt;
d) Schließen der Kavität (23);
e) Ausbildung des Trägers (13) durch Einspritzen von Kunststoff in die Kavität (23),
e1) wobei der eingespritzte Kunststoff die Vorderseite (19) der ersten Dekorschale (17a) und den ersten Teil (20a) der Vorderseite (20) der zweiten Dekorschale (18a) gegen die Wandung (25) drückt,
e2) wobei der eingespritzte Kunststoff im Überlappbereich (26) den zweiten Teil (20b) der Vorderseite (20) der zweiten Dekorschale (18a) gegen die Rückseite (21) der ersten Dekorschale (17a) drückt, und
e3) wobei der eingespritzte Kunststoff im Übergangsbereich (27) den dritten Teil (20c) der Vorderseite (20) der zweiten Dekorschale (18a) gegen die seitliche Grenzfläche (28) der ersten Dekorschale (17a) drückt.

2. Verfahren nach Anspruch 1,
**dadurch gekennzeichnet, dass**
das erste Dekormaterial (17) und/oder das zweite Dekormaterial (18) vor dem Vorformen oder die erste Dekorschale (17a) und/oder die zweite Dekorschale (18a) vor dem Einlegen in die Kavität (23) an ihrer nicht zur Ausbildung der Sichtseite des Formteils (10) vorgesehenen Rückseite (21; 22) und/oder das erste Dekormaterial (17) oder die erste Dekorschale (17a) an ihrer seitlichen Grenzfläche (28) mit einer Klebelage versehen werden.

3. Verfahren nach Anspruch 1 oder 2,
**dadurch gekennzeichnet, dass**
das erste Dekormaterial (17) und/oder das zweite Dekormaterial (18) vor dem Vorformen oder die erste Dekorschale (17a) und/oder die zweite Dekorschale (18a) vor dem Einlegen in die Kavität (23) an ihrer zur Ausbildung der Sichtseite des Formteils (10) vorgesehenen Vorderseite (19; 20) gestaltet und/oder bearbeitet und/oder lackiert werden.

4. Verfahren nach einem der vorhergehenden Ansprüche,
**dadurch gekennzeichnet, dass**
dass das erste Dekormaterial (17) eine größere Sprödigkeit und/oder eine kleinere Duktilität als das zweite Dekormaterial (18) aufweist.

5. Verfahren nach einem der vorhergehenden Ansprüche,
**dadurch gekennzeichnet, dass**
dass das erste Dekormaterial (17) eine größere Dicke als das zweite Dekormaterial (18) aufweist, wobei vorzugsweise das erste Dekormaterial (17) eine Dicke von mindestens 0,5 mm und das zweite Dekormaterial (18) eine Dicke von höchstens 0,4 mm aufweist, oder dass das erste Dekormaterial (17) eine kleinere Dicke als das zweite Dekormaterial (18) aufweist, wobei vorzugsweise das erste Dekormaterial (17) eine Dicke von höchstens 0,4 mm und das zweite Dekormaterial (18) eine Dicke von mindestens 0,5 mm aufweist.

6. Verfahren nach einem der vorhergehenden Ansprüche,
**dadurch gekennzeichnet, dass**
das erste Dekormaterial (17) eine Metalllage, insbesondere eine Aluminiumlage oder Edelstahllage oder Magnesiumlage oder Chromlage, oder eine Holzlage oder eine Kunststofflage oder eine Textillage ist oder umfasst und/oder das zweite Dekormaterial (18) eine Metalllage, insbesondere eine Edelstahllage oder eine Aluminiumlage oder eine Magnesiumlage oder eine Chromlage, oder eine Holzlage oder eine Kunststofflage oder eine Textillage ist oder umfasst.

## Claims

1. Method for producing a moulded part (10), in particular a decorative part and/or trim part in the form of a moulded part (10) for a vehicle interior,
comprising a decorative layer (14) on a moulded part front side (11) formed as a visible side and a carrier (13) on a moulded part rear side (12),
wherein the moulded part front side (11) formed as a visible side is divided into at least two regions, a first region (15) and a second region (16) adjacent to the first region (15),
wherein the decorative layer (14) comprises a first decorative material (17) and a second decorative material (18),
wherein the first decorative material (17) and the second decorative material (18) have the same thickness with a maximum deviation of 20% of the greater thickness,
the first decorative material (17) forming the visible side in the first region (15) of the moulded part front side (11) and the second decorative material (18) forming the visible side in the second region (16) of the moulded part front side (11),
comprising the following steps:
a) Preforming the first decorative material (17) into a first decorative shell (17a) and the second decorative material (18) into a second decorative shell (18a), the first decorative material (17) and the second decorative material (18) having the same thickness with a deviation of at most 20% of the greater thickness, the first decorative shell (17a) and the second decorative shell (18a) each having a front side (19; 20) for forming the visible side of the moulded part (10) and a rear side (21; 22);
b) inserting the first decorative shell (17a) into an opened cavity (23) of an injection mould (24) in such a way that the front side (19) of the first decorative shell (17a) at least partially rests against a wall (25) of the cavity (23);
c) Inserting the second decorative shell (18a) into the opened cavity (23) of the injection mould (24) in such a way,
c1) that a first part (20a) of the front side (20) of the second decorative shell (18a) at least partially abuts against the wall (25) of the cavity (23),
c2) that a second part (20b) of the front side (20) of the second decorative shell (18a) at least partially abuts the rear side (21) of the first decorative shell (17a) in an overlap region (26), and
c3) in that a third part (20c) of the front side (20) of the second decorative shell (18a) partially spans, in a transition region (27), a lateral interface (28) of the first decorative shell (17a) which connects the front side (19) and the rear side (21) of the first decorative shell (17a) to one another;
d) Closing the cavity (23);
e) Formation of the carrier (13) by injecting plastic into the cavity (23),
e1) wherein the injected plastic presses the front side (19) of the first decorative shell (17a) and the first part (20a) of the front side (20) of the second decorative shell (18a) against the wall (25),
e2) wherein the injected plastic in the overlap region (26) presses the second part (20b) of the front side (20) of the second decorative shell (18a) against the rear side (21) of the first decorative shell (17a), and
e3) wherein the injected plastic in the transition area (27) presses the third part (20c) of the front side (20) of the second decorative shell (18a) against the lateral interface (28) of the first decorative shell (17a).

2. Method according to claim 1,
**characterised in that**
the first decorative material (17) and/or the second decorative material (18) are provided with an adhesive layer on their rear side (21; 22), which is not intended for forming the visible side of the moulded part (10), and/or the first decorative material (17) or the first decorative shell (17a) are provided with an adhesive layer on their lateral boundary surface (28) before preforming, or the first decorative shell (17a) and/or the second decorative shell (18a) are provided with an adhesive layer on their rear side (21; 22), which is not intended for forming the visible side of the moulded part (10), before insertion into the cavity (23).

3. Method according to claim 1 or 2,
**characterised in that**
the first decorative material (17) and/or the second decorative material (18) are shaped and/or processed and/or painted on their front side (19; 20) intended for forming the visible side of the moulded part (10) before preforming or the first decorative shell (17a) and/or the second decorative shell (18a) are shaped and/or processed and/or painted before insertion into the cavity (23).

4. Method according to any of the preceding claims,
**characterised in that**
**in that** the first decorative material (17) has a greater brittleness and/or a smaller ductility than the second decorative material (18).

5. Method according to any of the preceding claims,
**characterised in that**
**in that** the first decorative material (17) has a greater thickness than the second decorative material (18), preferably the first decorative material (17) having a thickness of at least 0.5 mm and the second decorative material (18) having a thickness of at most 0.4 mm, or
**in that** the first decorative material (17) has a smaller thickness than the second decorative material (18), the first decorative material (17) preferably having a thickness of at most 0.4 mm and the second decorative material (18) having a thickness of at least 0.5 mm.

6. Method according to any one of the preceding claims,
**characterised in that**
the first decorative material (17) is or comprises a metal layer, in particular an aluminium layer or a stainless steel layer or a magnesium layer or a chromium layer, or a wood layer or a plastic layer or a textile layer and/or the second decorative material (18) is or comprises a metal layer, in particular a stainless steel layer or an aluminium layer or a magnesium layer or a chromium layer, or a wood layer or a plastic layer or a textile layer.

## Revendications

1. Procédé de fabrication d'une pièce moulée (10), notamment d'une pièce décorative et/ou d'une pièce de garniture conçue comme une pièce moulée (10) pour un intérieur de véhicule,
comprenant une couche décorative (14) sur une face avant de partie moulée (11) formée comme une face visible et un support (13) sur une face arrière de partie moulée (12),
dans lequel la face avant de la pièce moulée (11) formée comme une face visible est divisée en au moins deux régions, une première région (15) et une seconde région (16) adjacente à la première région (15),
dans lequel la couche décorative (14) comprend un premier matériau décoratif (17) et un second matériau décoratif (18),
dans lequel le premier matériau décoratif (17) et le second matériau décoratif (18) ont la même épaisseur avec un écart d'au plus 20 % de la plus grande épaisseur,
dans lequel le premier matériau décoratif (17) forme la face visible dans la première région (15) de la face avant de la pièce moulée (11) et le second matériau décoratif (18) forme la face visible dans la seconde région (16) de la face avant de la pièce moulée (11), comprend les étapes suivantes:
a) Préformage du premier matériau décoratif (17) en une première coque décorative (17a) et du second matériau décoratif (18) en une seconde coque décorative (18a), le premier matériau décoratif (17) et le second matériau décoratif (18) présentant la même épaisseur avec un écart de 20 % maximum de la plus grande épaisseur, la première coque décorative (17a) et la seconde coque décorative (18a) présentant chacune une face avant (19 ; 20) pour former la face visible de la pièce moulée (10) et une face arrière (21; 22);
b) insérer la première coque décorative (17a) dans une cavité ouverte (23) d'un moule à injection (24) de telle sorte que la face avant (19) de la première coque décorative (17a) repose au moins partiellement contre une paroi (25) de la cavité (23);
c) insérer la deuxième coque décorative (18a) dans la cavité ouverte (23) du moule d'injection (24) de cette manière,
c1) qu'une première partie (20a) de la face avant (20) de la seconde coque décorative (18a) bute au moins partiellement contre la paroi (25) de la cavité (23),
c2) qu'une deuxième partie (20b) de la face avant (20) de la deuxième coque décorative (18a) bute au moins partiellement contre la face arrière (21) de la première coque décorative (17a) dans une région de chevauchement (26), et
c3) en ce qu'une troisième partie (20c) de la face avant (20) de la deuxième coque décorative (18a) recouvre partiellement, dans une zone de transition (27), une interface latérale (28) de la première coque décorative (17a) qui relie entre elles la face avant (19) et la face arrière (21) de la première coque décorative (17a);
d) Fermeture de la cavité (23);
e) former le support (13) en injectant du plastique dans la cavité (23),
e1) dans lequel le plastique injecté presse le côté frontal (19) de la première coque décorative (17a) et la première partie (20a) du côté frontal (20) de la seconde coque décorative (18a) contre la paroi (25),
e2) dans lequel le plastique injecté dans la région de chevauchement (26) presse la seconde partie (20b) du côté avant (20) de la seconde coque décorative (18a) contre le côté arrière (21) de la première coque décorative (17a), et
e3) dans lequel le plastique injecté dans la région de transition (27) presse la troisième partie (20c) de la face avant (20) de la deuxième coque décorative (18a) contre l'interface latérale (28) de la première coque décorative (17a).

2. Procédé selon la revendication 1,
**caractérisé en ce que**
le premier matériau décoratif (17) et/ou le second matériau décoratif (18) sont pourvus d'une couche adhésive sur leur face arrière (21; 22), qui n'est pas destinée à former la face visible de la pièce moulée (10), et/ou le premier matériau décoratif (17) ou la première coque décorative (17a) sont pourvus d'une couche adhésive sur leur surface de délimitation latérale (28) avant le préformage ou avant l'insertion de la première coque décorative (17a) et/ou de la seconde coque décorative (18a) dans la cavité (23).

3. Procédé selon la revendication 1 ou 2,
**caractérisé en ce que**
le premier matériau décoratif (17) et/ou le second matériau décoratif (18) sont formés et/ou traités et/ou peints sur leur face avant (19; 20) destinée à former la face visible de la pièce moulée (10) avant le préformage ou la première coque décorative (17a) et/ou la seconde coque décorative (18a) sont formés et/ou traités et/ou peints sur leur face avant (19 ; 20) destinée à former la face visible de la pièce moulée (10) avant l'insertion dans la cavité (23).

4. Procédé selon l'une quelconque des revendications précédentes,
**caractérisé en ce que**
**en ce que** le premier matériau décoratif (17) a une plus grande fragilité et/ou une plus petite ductilité que le second matériau décoratif (18).

5. Procédé selon l'une quelconque des revendications précédentes,
**caractérisé en ce que**
**en ce que** le premier matériau décoratif (17) a une plus grande épaisseur que le second matériau décoratif (18), de préférence le premier matériau décoratif (17) ayant une épaisseur d'au moins 0,5 mm et le second matériau décoratif (18) ayant une épaisseur d'au plus 0,4 mm, ou
**en ce que** le premier matériau décoratif (17) a une épaisseur inférieure à celle du second matériau décoratif (18), le premier matériau décoratif (17) ayant de préférence une épaisseur d'au plus 0,4 mm et le second matériau décoratif (18) ayant une épaisseur d'au moins 0,5 mm.

6. Procédé selon l'une quelconque des revendications précédentes,
**caractérisé en ce que**
le premier matériau décoratif (17) est ou comprend une couche métallique, en particulier une couche d'aluminium ou une couche d'acier inoxydable ou une couche de magnésium ou une couche de chrome, ou une couche de bois ou une couche de plastique ou une couche de textile et/ou le second matériau décoratif (18) est ou comprend une couche métallique, en particulier une couche d'acier inoxydable ou une couche d'aluminium ou une couche de magnésium ou une couche de chrome, ou une couche de bois ou une couche de plastique ou une couche de textile.
